# DEMANDE DE BREVET EUROPEEN

(11) **EP 1 777 964 A1**
(43) Date de publication de la demande: **25.04.2007**
(21) Numéro de dépôt: 06291617.6
(22) Date de dépôt: 17.10.2006
(51) Int. Cl.: H04N 7/24, H04N 17/00

(54) **Procédé de visualisation du contenu d'un signal de télévision numérique de type DVB, notamment DVB-H**

(30) Priorité: 19.10.2005 FR 0510640
(71) Demandeur: TDF, 75015 Paris (FR)
(72) Inventeur: Mazieres, Bertrand, 54000 Nancy (FR)
(74) Mandataire: Jacquard, Philippe Jean-Luc

(57) **Abrégé**

L'invention se rapporte à un procédé de visualisation du contenu d'un signal de télévision numérique DVB-H comprenant une pluralité de flux dont les paquets (TS) sont identifiés par un identifiant de paquet (PID) correspondant chacun à un programme ou un service, caractérisé en ce qu'il met en oeuvre l'affichage, sur un graphique à deux dimensions, dont la première représente le temps et la deuxième le débit binaire, de piles successives de symboles graphiques empilés parallèlement à la deuxième dimension, chaque pile représentant un empilement desdits symboles graphiques dont chacun représente un paquet (TS), chaque symbole graphique étant différencié en fonction du flux auquel appartient le paquet. Le procédé peut mettre en oeuvre un ordonnancement des paquets de chaque pile de manière à regrouper les paquets par flux.

## Description

La présente invention concerne un procédé de visualisation du contenu d'un canal de télévision numérique de type DVB et en particulier DVB-H pour permettre de contrôler en temps réel la validité du signal.

Le standard DVB-H met en oeuvre des flux de transport MPEG2 TS, avec application d'un découpage en temps (« time slicing ») des flux.

Ce type d'organisation découpée dans le temps ainsi que l'adjonction d'un code d'erreur MPE FEC impliquent la mise en oeuvre de moyens appropriés afin de vérifier la validité du signal émis.

La présente invention a pour objet un procédé simple, rapide et peu coûteux pour vérifier la validité d'un flux DVB-H à différents niveaux d'une chaîne de transmission, et en particulier pour vérifier que chacun des éléments de la chaîne pris séparément ne met pas en danger la validité du signal.

L'invention concerne ainsi un procédé de visualisation du contenu d'un signal de télévision numérique DVB, notamment de type DVB-H, DVB-T, DVB-S ou DVB-C, comprenant une pluralité de flux dont les paquets TS sont identifiés par un identifiant de paquet PID correspondant chacun à un programme ou un service, caractérisé en ce qu'il met en oeuvre l'affichage, sur un graphique à deux dimensions, dont la première représente le temps et la deuxième le débit binaire, de piles successives de symboles graphiques empilés parallèlement à la deuxième dimension, chaque pile représentant un empilement desdits symboles graphiques dont chacun représente un paquet TS, chaque symbole graphique étant différencié en fonction du flux auquel appartient le paquet. Le procédé peut mettre en oeuvre un ordonnancement des paquets de chaque pile de manière à regrouper les paquets par flux.

On obtient ainsi le résultat technique d'ensemble qui est la surveillance de chacun des flux et éventuellement du débit total par rapport au débit maximal autorisé.

Avantageusement, le procédé met en oeuvre une élimination des paquets nuls.

Ladite différenciation des symboles graphiques est par exemple une couleur qui est associée à chacun des flux du signal.

L'affichage présente avantageusement une indication d'un débit maximal autorisé.

Le procédé peut mettre en oeuvre, pour au moins un flux, la visualisation d'un code correcteur MPE FEC. Cette visualisation est avantageusement effectuée dans la même couleur que pour les autres paquets dudit flux, mais dans une nuance différente.

D'autres caractéristiques et avantages de l'invention apparaîtront mieux à la lecture de la description ci-après, en liaison avec les dessins dans lesquels :
- la figure 1 illustre un signal DVB-H coexistant, ainsi que le permet la Norme, avec un signal DVB-T (sans découpage en temps) dans le même multiplex ;
- la figure 2 illustre un affichage graphique du signal DVB-H (la différenciation des couleurs apparaît ici et dans les figures suivantes seulement par une différence de niveaux de gris) ;
- la figure 3 illustre un affichage selon l'invention associant une couleur à chaque flux après ordonnancement des paquets de chaque colonne selon leur identifiant PID et suppression des paquets nuls ;
- la figure 4 illustre un affichage selon l'invention dans lequel les flux correspondant aux codes FEC sont représentés séparément dans des nuances de couleur différentes, la figure 5 étant une représentation dans un cas simple dans lequel il y a trois services;
- la figure 6 illustre un affichage d'un multiplex DVBT/H ;
- et les figures 7a et 7b illustrent un affichage graphique du signal DVB-H et ce même affichage après suppression des paquets nuls.

Les services d'un multiplex DVB-H sont fournis sous forme des paquets TS de 188 octets qui sont identifiés par un identifiant de paquet PID indiquant entre autres choses à quel programme ou service appartient le paquet.

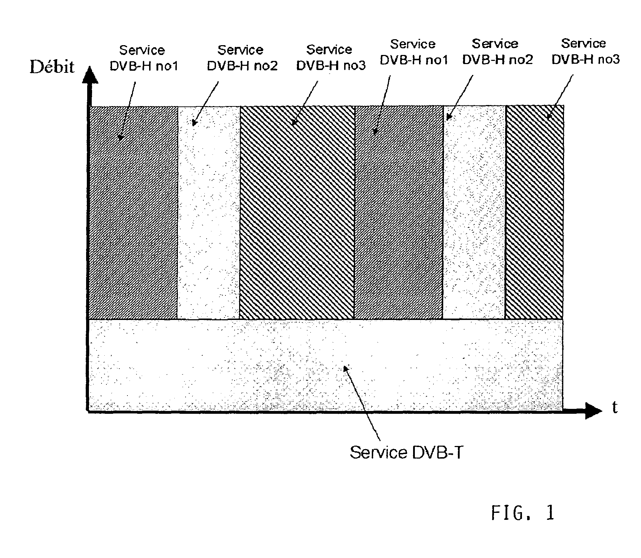

Le multiplex représenté à la figure 1 comporte un premier service DVB-T (sans découpage en temps, c'est-à-dire émis en continu) et trois services DVB-H n° 1, 2 et 3, émis à tour de rôle (c'est-à-dire avec découpage en temps). Le but de ce découpage dans le temps est notamment de diminuer le temps de réception d'un récepteur mobile et donc d'économiser l'énergie électrique des batteries du récepteur, puisque celui-ci ne doit rester en mode réception que lors de la réception du service ou programme qui l'intéresse, et se mettre en mode repos le reste du temps, pendant l'émission des autres services ou programmes.

La présente invention concerne la visualisation des services d'un multiplex DVB-H qui sont émis avec découpage en temps (« time slicing »), et coexistant ou non avec un ou plusieurs services DVB-T.

On représente chaque paquet TS de 188 octets par un symbole, par exemple un rectangle, dont un paramètre d'affichage, par exemple la couleur, varie en fonction de l'identifiant de flux PID dans un graphique ayant pour abscisse le temps en secondes et en ordonnées le débit (Mbps). Chaque colonne résulte de l'accumulation des paquets reçus pendant un temps donné, ce qui donne directement la lecture du débit qui est proportionnel au nombre de paquets par unité de temps.

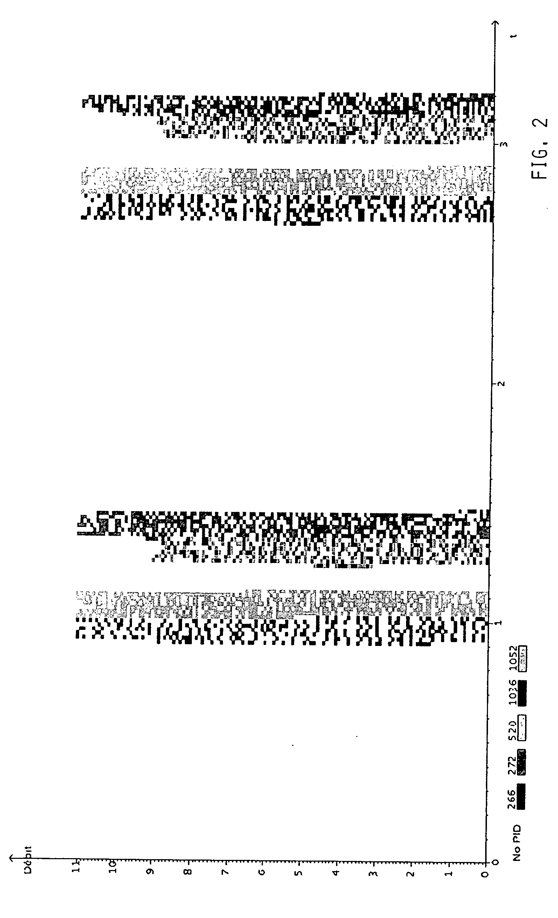

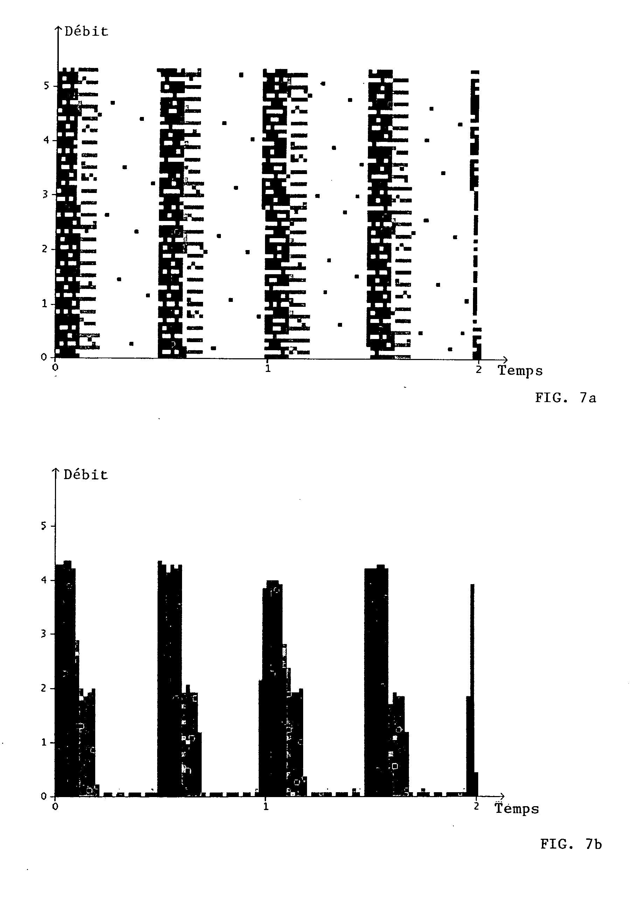

Une telle représentation « brute » est illustrée à la figure 2. On voit qu'elle ne permet pas une analyse « à vue » du flux. La représentation de la figure 2 peut être améliorée en éliminant les paquets nuls (sans ordonner les paquets selon leur identifiant de flux PID). Ceci permet de visualiser les signaux selon leur arrivée. Les figures 7a et 7b illustrent respectivement une représentation brute (telle que celle de la figure 2) dans une configuration où les paquets de chaque flux n'arrivent pas tous dans l'ordre des flux et la même représentation après suppression des paquets nuls.

Pour obtenir une analyse "à vue" de flux, on ordonne les paquets de chaque colonne selon leur identifiant de flux PID, c'est-à-dire correspondant à un même programme ou service.

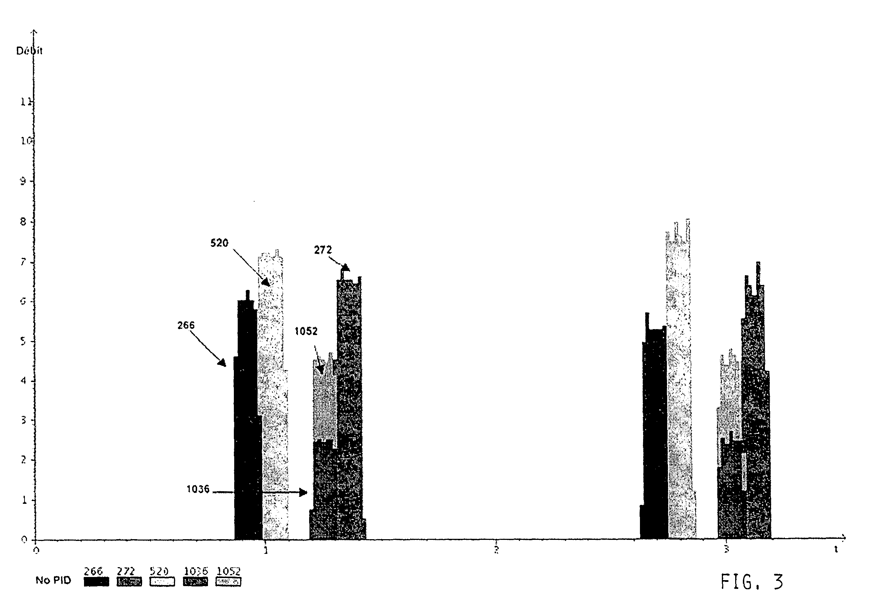

Cette représentation apparaît à la figure 3 pour les flux DVB-H 266, 272, 520, 1036 et 1052, et permet de visualiser immédiatement le flux correspondant à chaque programme ou service, ainsi que sa présence après la traversée d'un équipement ou d'une chaîne de transmission. Pour la clarté de la visualisation, on élimine les paquets nuls.

Cette représentation rend en outre possible de vérifier le temps qui sépare deux séries de paquets (ou « bursts ») ayant la même couleur et correspondant à un même programme ou service.

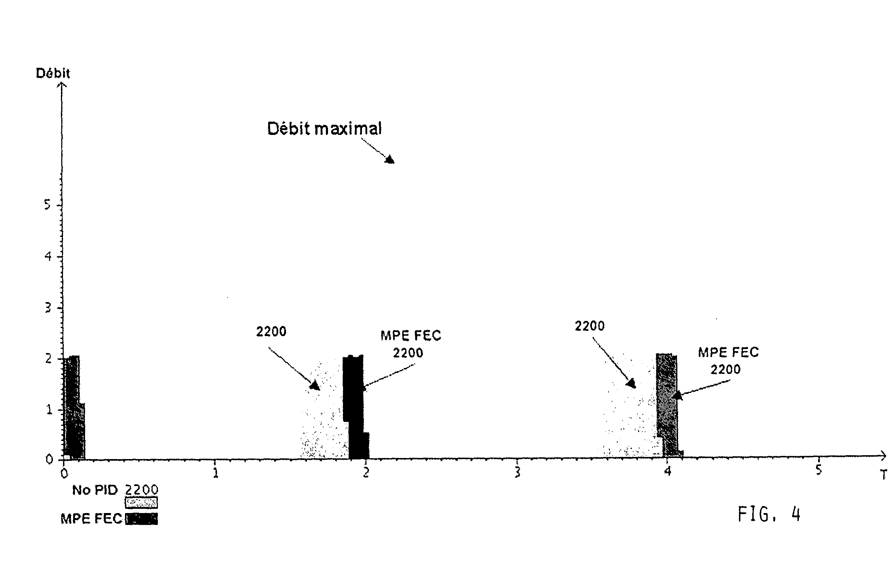

Lorsqu'un flux PID contient des paquets comportant un code correcteur MPE FEC, on peut les afficher dans la même couleur, mais dans une autre nuance par exemple plus sombre, comme représenté à la figure 4 pour le flux DVB-H 2200.

La figure 4 montre également un trait horizontal figurant le débit maximal autorisé simplement calculé en réalisant l'observation du nombre de paquets de 188 octets dans un intervalle de temps donné. Ce trait permet de vérifier que le multiplex n'est pas en dépassement, aucune des colonnes n'atteignant cette ligne de débit maximal.

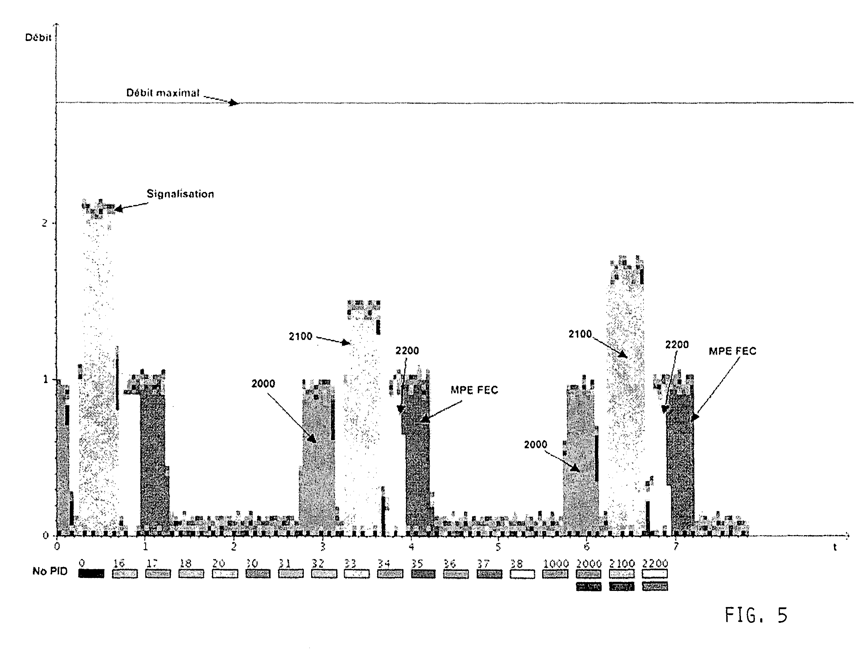

Les autres paquets TS par exemple ceux contenant des données de signalisation PSI/SI sont affichés sous forme de symboles graphiques, selon une nuance de couleur correspondant au flux PID dont ces paquets relèvent. Cet affichage a lieu de préférence au sommet des colonnes de symboles graphiques (et entre elle-ci le cas échéant), comme représenté par la figure 5.

La figure 5 montre le cas d'un affichage d'un multiplex DVB-H correspondant à trois flux PID n° 2000, 2100 et 2200. Un filtrage des flux PID a permis de n'afficher que trois flux DVB-H, ainsi que l'ensemble de la signalisation.

Il est en effet possible de sélectionner les services affichés en ne conservant que les paquets TS dont les identifiants PID correspondent aux dits services sélectionnés. Les services sélectionnés peuvent être choisis pour être seulement ceux des services DVB-H, c'est-à-dire les services découpés dans le temps ("time slicing"). Cette différenciation des services DVB-H se fait par exemple par une analyse de la trame des paquets.

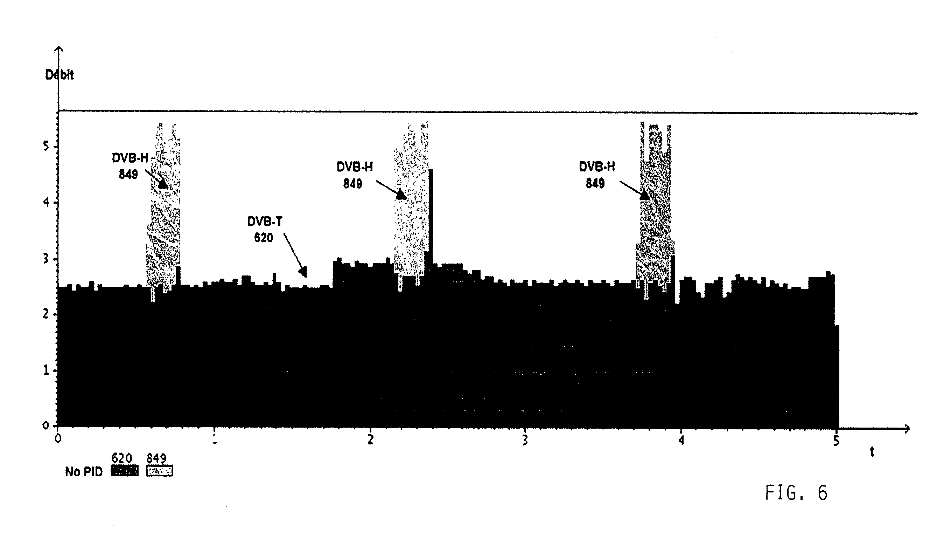

La figure 6 illustre le cas d'un affichage d'un multiplex DVBT/H associant un flux DVB-T (620) et un flux DVB-H(849). On voit qu'à partir de l'abscisse, les symboles graphiques du (ou des) flux DVB-T, sont affichés en premier lieu, et sont surmontés par les pics correspondant au flux (ou aux flux) DVB-H du multiplex. Pour le flux DVB-T, on empile des symboles graphiques similaires à ceux utilisés pour l'affichage DVB-H, ce qui permet de conserver une même échelle pour le débit.

Le procédé selon l'invention peut être utilisé pour délivrer une ou plusieurs alarmes, à savoir :
- alarme en l'absence d'un service, c'est-à-dire absence d'identifiant PID pour un ou plusieurs services donnés, pendant un nombre de séries de paquets ou cycles donné (par exemple 2 à 10 cycles),
- et/ou alarme en cas de dépassement d'une valeur déterminée du débit par au moins un service.

## Revendications

1. Procédé de visualisation du contenu d'un signal de télévision numérique DVB comprenant une pluralité de flux dont les paquets (TS) sont identifiés par un identifiant de paquet (PID) correspondant chacun à un programme ou un service, **caractérisé en ce qu'**il met en oeuvre l'affichage, sur un graphique à deux dimensions, dont la première représente le temps et la deuxième le débit binaire, de piles successives de symboles graphiques empilés parallèlement à la deuxième dimension, chaque pile représentant un empilement desdits symboles graphiques dont chacun représente un paquet (TS), chaque symbole graphique étant différencié en fonction du flux auquel appartient le paquet.

2. Procédé selon la revendication 1, **caractérisé en ce qu'**il met en oeuvre un ordonnancement des paquets de chaque pile de manière à regrouper les paquets par flux.

3. Procédé selon une des revendications 1 ou 2, **caractérisé en ce que** les piles sont réalisées avec élimination des paquets nuls.

4. Procédé selon une des revendications 1 à 3, **caractérisé en ce que** ladite différentiation des symboles graphiques est une couleur qui est associée à chacun des flux.

5. Procédé selon une des revendications précédentes, **caractérisé en ce que** pour un flux DVBT/H associant au moins un flux DVB-T et au moins un flux DVB-H, l'affichage est obtenu en affichant les symboles graphiques du ou des flux DVB-T, puis lesdites piles de symboles graphiques du ou des flux DVB-H.

6. Procédé selon une des revendications précédentes, **caractérisé en ce qu'**il présente une indication d'un débit maximal autorisé.

7. Procédé selon une des revendications précédentes, **caractérisé en ce qu'**il met en oeuvre la visualisation pour au moins un flux d'un code correcteur MPE FEC.

8. Procédé selon la revendication 7, **caractérisé en ce que** ladite visualisation du code correcteur MPE FEC d'un flux est effectuée dans la même couleur que pour les autres paquets dudit flux , mais dans une nuance différente.

9. Procédé selon une des revendications précédentes, **caractérisé en ce que** seuls des services sélectionnés sont affichés, en filtrant les paquets (TS) pour ne conserver que ceux dont les identifiants de paquet (PID) correspondent aux dits services sélectionnés.

10. Procédé selon la revendication 9, **caractérisé en ce que** les services sélectionnes sont des services DVB-H.

11. Procédé selon la revendication 10, **caractérisé en ce que** la différenciation des services DVB-H s'effectue par analyse de la trame des paquets.

12. Procédé selon une des revendications précédentes, **caractérisé en ce qu'**il met en oeuvre une alarme en l'absence d'identifiant PID pour au moins un service, pendant au moins 2 cycles, notamment pendant 2 à 10 cycles successifs et/ou en cas de dépassement d'une valeur déterminée du débit par au moins un service.
